# EUROPEAN PATENT SPECIFICATION

(11) **EP 0 580 444 B1**
(45) Date of publication and mention of the grant of the patent: **12.03.1997**
(21) Application number: 93305819.0
(22) Date of filing: 23.07.1993
(51) Int. Cl.: A01N 1/02

(54) **Solution for organ transplantation use**
Lösung zur Verwendung bei der Transplantation von Organen
Solution pour l'utilisation dans la transplantation d'organes

(30) Priority: 24.07.1992 JP 218416/92
(43) Date of publication of application: 26.01.1994
(73) Proprietor: Wada, Hiromi, Otsu-shi, Shiga-ken (JP)
(72) Inventor: Wada, Hiromi, Otsu-shi, Shiga-ken (JP); Fujii, Mitsuharu, Otsu-shi, Shiga-ken (JP)
(74) Representative: Nicholls, Kathryn Margaret

(56) References cited:
- WO-A-87/01940
- CHEMICAL ABSTRACTS, vol. 99, no. 23, 5 December 1983, Columbus, Ohio, US; abstract no. 188245e, S.AGAWA 'Effect of disaccharides, heptose and sialic acid on release of glucagon from the isolated perfused rat pancreas' page 152 ;

## Description

### BACKGROUND OF THE INVENTION

This invention relates to a solution for organ transplantation use, more particularly to a solution which is used for the perfusion through, or storage of, living organs to be transplanted.

One of the solutions for organ transplantation use which have been used most frequently in Europe and America is the Euro-Collins solution that contains potassium chloride, potassium dihydrogenphosphate, dipotassium hydrogenphosphate, sodium bicarbonate and glucose. However, though this solution is successfully applicable to kidneys which have a high function-maintaining capacity, its capacity for protecting other organs from degeneration of living cells is not sufficient, which, in turn, poses a problem in terms of shorter periods of maintaining the function of organs.

Recently, an electrolytic solution, University of Wisconsin solution (Japanese Patent Application Kokai No. Hei 1-246201), has been developed which contains sodium lactobionate and raffinose both as impermeabilizing agents and hydroxyethyl starch as a colloid osmotic agent and which is further supplemented with adenosine, insulin and the like in consideration of cellular energy metabolism. This solution has, however, disadvantages in that it is not so stable from the galenical pharmacy point of view and it requires low temperature storage.

Therefore, embodiments of the present invention desirably provide a solution for use in the perfusion through,or storage of, living organs to be transplanted, which has an excellent capacity for maintaining the function of organs and is stable from the galenical pharmacy point of view.

The inventors of the present invention have conducted intensive studies on combinations and formulation ratios of various types of electrolytes, osmotic pressure modifiers, colloid osmotic agents and cell membrane stabilizers and, as the results, have accomplished the present invention which can overcome the aforementioned problems.

According to the present invention, there is provided a solution for organ transplantation use which comprises the following components dissolved per 1,000 ml of the solution within the following respective ranges, both indicated in Table 1, and has an osmotic pressure of from 270 to 450 mOsm/l and a pH value of from 7 to 8.

**Table 1**

| | |
|---|---|
| trehalose | 50 - 240 mM |
| Na⁺ | 10 - 140 mM |
| K⁺ | 4 - 140 mM |
| Mg⁺⁺ | 0 - 4 mM |
| Ca⁺⁺ | 0 - 2 mM |
| H₂PO₄⁻ and/or HPO₄⁻⁻ | 12 - 65 mM |
| one or more of Cl⁻, HCO₃⁻, CO₃⁻⁻, an organic acid, and an organic acid anion | 15 - 150 mM |
| hydroxyethyl starch | 0 - 80 g |

The solution of the present invention has the composion given in the previous section, and its preferred essential composition will be indicated in the following Table 2.

**Table 2**

| | |
|---|---|
| trehalose | 100 - 210 mM |
| Na⁺ | 20 - 120 mM |
| K⁺ | 20 - 130 mM |
| Mg⁺⁺ | 0 - 2 mM |
| Ca⁺⁺ | 0 - 1 mM |
| H₂PO₄⁻ and/or HPO₄⁻⁻ | 20 - 60 mM |
| one or more of Cl⁻, HCO₃⁻, CO₃⁻⁻, an organic acid, and an organic acid anion | 20 - 120 mM |
| hydroxyethyl starch | 20 - 40 g |

Also, a preferred osmotic pressure is in the range of from 270 to 380 mOsm/l.

Among the three existing trehalose species, namely α,α-trehalose, α,β-trehalose and β,β-trehalose, the naturally occurring α,α-trehalose can be used more preferably as the trehalose component of a solution of the present invention. The hydroxyethyl starch to be used in the above solution may have a substitution degree within the range of from 0.4 to 0.8, and an average molecular weight (as determined by gel-filtration) of preferably from 200,000 to 900,000, more preferably from 350,000 to 800,000.

Examples of the organic acid described above include gluconic acid, lactic acid, acetic acid, propionic acid, β-hydroxybutyric acid, citric acid and the like, and illustrative examples of the electrolyte for providing the above anions and cations include the sodium or potassium salts of the aforementioned organic acids, as well as sodium chloride, potassium chloride, magnesium chloride, calcium chloride, sodium dihydrogenphosphate, potassium dihydrogenphosphate, disodium hydrogenphosphate, dipotassium hydrogenphosphate, sodium bicarbonate, potassium bicarbonate, sodium carbonate, potassium carbonate and the like.

The solution of the present invention for use in the transplantation of living organs may of course comprise other additives including, for example, active enzyme eliminating agents, cell activators such as ATP, and antibiotics.

The solution for organ transplantation use of the present invention can be produced easily in accordance with any known process for the production of transfusions.

### (Functions)

Since the solution for organ transplantation use of the present invention exerts excellent effects in terms of organ cell protection and edema inhibition, it can maintain the function of organs for a prolonged period of time. Also, the solution for organ transplantation use of the present invention is stable from the galenical pharmacy point of view, because it does not contain unstable compounds such as insulin, a component of the prior art UW solution.

Hereinafter, the present invention will be further described with reference to examples thereof, to illustrate specifically the characteristics of the present invention.

### Example 1

In 800 ml of distilled water controlled at about 50°C were dissolved 35 g (102.3 mM) of α,α-trehalose, 1.12 g (15 mM) of potassium chloride, 2.05 g (15 mM) of potassium dihydrogenphosphate and 7.4 g (42 mM) of dipotassium hydrogenphosphate, followed by the addition of 0.84 g (10 mM) of sodium bicarbonate and distilled water to the total volume of 1,000 ml.

The resulting solution was immediately subjected to filtration, and the filtrate was packed in a glass bottle, tightly sealed and then subjected to steam sterilization to obtain a solution for organ transplantation use having an osmotic pressure of 271 mOsm/l and a pH value of 7.46.

### Example 2

In 800 ml of distilled water controlled at about 50°C were dissolved 70 g (204.6 mM) of α,α-trehalose, 1.12 g (15 mM) of potassium chloride, 2.05 g (15 mM) of potassium dihydrogenphosphate and 7.4 g (42 mM) of dipotassium hydrogenphosphate, followed by the addition of 0.84 g (10 mM) of sodium bicarbonate and subsequent adjustment of the total volume to 1,000 ml with distilled water.

The resulting solution was immediately subjected to filtration, and the filtrate was packed in a glass bottle, tightly sealed and then subjected to steam sterilization to obtain a solution for organ transplantation use having an osmotic pressure of 373 mOsm/l and a pH value of 7.42.

### Example 3

In 800 ml of distilled water controlled at about 50°C were dissolved 41 g (120 mM) of α,α-trehalose, 30 g of hydroxyethyl starch (average molecular weight, 429,000; substitution degree, 0.55), 21.81 g (100 mM) of sodium gluconate, 0.885 g (6.5 mM) of potassium dihydrogenphosphate and 3.222 g (18.5 mM) of dipotassium hydrogenphosphate, followed by the adjustment of the total volume to 1,000 ml with distilled water.

The resulting solution was immediately subjected to filtration, and the filtrate was packed in a glass bottle, tightly sealed and then subjected to steam sterilization to obtain a solution for organ transplantation use having an osmotic pressure of 366 mOsm/l and a pH value of 7.35.

### Example 4

In 800 ml of distilled water controlled at about 50°C were dissolved 41 g (120 mM) of α,α-trehalose, hydroxyethyl starch (average molecular weight, 429,000; substitution degree, 0.55), 4.362 g (20 mM) of sodium gluconate, 20.263 g (80 mM) of potassium gluconate, 0.885 g (6.5 mM) of potassium dihydrogenphosphate and 3.222 g (18.5 mM) of dipotassium hydrogenphosphate, followed by the adjustment of the total volume to 1,000 ml with distilled water.

The resulting solution was immediately subjected to filtration, and the filtrate was packed in a glass bottle, tightly sealed and then subjected to steam sterilization to obtain a solution for organ transplantation use having an osmotic pressure of 370 mOsm/l and a pH value of 7.37.

Left lung sympatric transplantation was carried out using adult mongrel dogs to examine effects of the solution for organ transplantation use of the present invention on the perfusion through, and preservation of, living organs.

### Test Example 1

### Method:

A total of 34 mongrels of 7.6 to 13.2 kg in weight were divided into 17 pairs, each pair (an organ donor dog and an organ recipient dog) having almost the same height and weight, and the resulting pairs were divided into three groups at random (5 pairs in Group I, 6 pairs in Group II and 6 pairs in Group III) to be used in the following experiments.
Firstly, each of the organ donors was anesthetized with halothane, and perfusion of a test solution controlled at 8 to 10°C (the solution obtained in Example 1 for Group I, the solution of Example 2 for Group II, and the aforementioned Euro-Collins solution for Group III) was carried out from its left lung artery in accordance with the drip method under the conditions of 50 ml/kg and 50 cm H₂O. After completion of the perfusion, the heart and the left lung were excised without separating from each other and preserved by soaking them in 500 ml of the same test solution at 8 to 10°C.

After 12 hours of the preservation period, each organ recipient was anesthetized to excise its left lung and replace it with the preserved left lung portion by transplantation in accordance with the Veith's method. Thereafter, the blood was recirculated and the right lung artery was clamped after 40, 70, and 130 minutes of the recirculation to measure in the usual way the arterial blood oxygen partial pressure and the left lung pulmonary arterial pressure.

Next, each organ recipient was sacrificed, and specimens were collected from the upper and lower lobes of its transplanted lung and subjected to HE staining to obtain pathologic findings. Each of the remaining portions of the upper and lower lobes was checked for its weights before drying (wet weight) and after drying in an oven (dry weight) to calculate a wet to dry weight ratio.

### Results:

Results of the measurement of the arterial blood oxygen partial pressure are shown in Table 3. The ventilation capacity of the transplanted lungs of the test groups (Groups I and II) which had been treated with the solutions for organ transplantation use of the present invention, was well maintained even after 130 minutes of the transplantation and was significantly superior to that of the control group (Group III) which had been treated with the Euro-Collins solution.

**Table 3**

| Arterial blood oxygen partial pressure (mmHg) | | | | |
|---|---|---|---|---|
| Group | Organ donor | Organ recipient (after left lung transplantation and blood recirculation) | | |
| | Before left lung excision | After 40 min. | After 70 min. | After 130 min. |
| I | 281.8 ± 10.6 | 283.4 ± 14.0 | 277.5 ± 19.9 | 264.9 ± 26.2 |
| II | 287.6 ± 6.7 | 302.2 ± 14.7 | 287.9 ± 18.8 | 257.5 ± 33.0 |
| III | 283.9 ± 3.4 | 162.9 ± 44.5 | 135.1 ± 40.8 | 114.8 ± 49.2 |

Results of the measurement of the pulmonary arterial pressure of the transplanted lungs are shown in Table 4. Though significant differences were not found among the three groups, a tendency was found that the arterial pressure was the lowest for Group II, followed by Group I and Group III.

**Table 4**

| Pulmonary arterial pressure of transplanted lung (mmHg) | | | |
|---|---|---|---|
| Group | Organ recipient (after left lung transplantation and blood recirculation) | | |
| | After 40 min. | After 70 min. | After 130 min. |
| I | 36.4 ± 2.2 | 35.0 ± 1.4 | 31.2 ± 2.0 |
| II | 34.2 ± 4.7 | 30.3 ± 4.6 | 30.3 ± 2.5 |
| III | 41.6 ± 7.0 | 39.4 ± 6.7 | 40.8 ± 6.8 |

As an index which reflects the degree of edema in the transplanted lungs, wet to dry weight ratios were calculated, with the results shown in Table 5. Similar to the above case, significant differences were not found among the three groups, but a tendency was found that the degree of edema was the lowest for Group I, followed by Group II and Group III.

**Table 5**

| Wet to dry weight ratio of transplanted lung | |
|---|---|
| Group | Ratio |
| I | 6.21 ± 0.64 |
| II | 6.50 ± 0.20 |
| III | 8.43 ± 1.14 |

When the HE-stained lung lobe specimens were observed, all of the specimens obtained from Groups I and II showed almost the normal lung structure. As regards Group III, however, serious edema-like changes were found in 5 of the 6 cases, and a partial change in the remaining case.

### Test Example 2

### Method:

A total of 22 mongrel dogs of 7.7 to 12.9 kg in weight were divided into 11 pairs, each pair (an organ donor and an organ recipient) having almost the same height and weight, the resulting pairs were divided into two groups at random (5 pairs in Group IV and 6 pairs in Group V), and, in the same manner as in Test Example 1 (the solution obtained in Example 3 was used for Group IV, and the Euro-Collins solution for Group V), the heart and the left lung were excised from each individual and preserved by soaking them in the respective solutions.

After 20 hours of the preservation period, transplantation of the left lungs was carried out, followed by recirculation of the blood. The arterial blood oxygen partial pressure and the pulmonary arterial pressure were subsequently measured after 40, 70, and 130 minutes. In this test example, the pulmonary vascular resistance in the left lungs was also measured after 130 minutes of the blood recirculation. Moreover, in the same manner as in Test Example 1, specimens were collected from the left lungs and subjected to HE staining, and the remaining portions of the lungs were checked for their wet to dry weight ratio.

### Results:

Results of the measurement of the arterial blood oxygen partial pressures are shown in Table 6. The ventilation capacity of the transplanted lungs of the test group (Group IV) which had been treated with the solution for organ transplantation use of the present invention, was well maintained even after 130 minutes of the transplantation and was significantly superior to that of the control group (Group V) which had been treated with the Euro-Collins solution.

**Table 6**

| Arterial blood oxygen partial pressure (mmHg) | | | | |
|---|---|---|---|---|
| Group | Organ donor | Organ recipient (after left lung transplantation and blood recirculation) | | |
| | Before left lung excision | After 40 min. | After 70 min. | After 130 min. |
| IV | 316.9 ± 26.0 | 291.5 ± 6.5 | 299.8 ± 7.5 | 292.3 ± 20.1 |
| V | 294.9 ± 9.0 | 92.1 ± 23.7 | 96.5 ± 29.6 | 80.5 ± 20.8 |

Results of the measurement of the arterial pressure of the transplanted lungs are shown in Table 7. Though significant differences were not found between the two groups, the arterial pressure for Group IV showed a lower tendency than Group V.

**Table 7**

| Pulmonary arterial pressure of transplanted lung (mmHg) | | | |
|---|---|---|---|
| Group | Organ recipient (after left lung transplantation and blood recirculation) | | |
| | After 40 min. | After 70 min. | After 130 min. |
| IV | 26.0 ± 4.3 | 23.4 ± 4.4 | 26.8 ± 6.4 |
| V | 35.4 ± 3.0 | 29.8 ± 2.3 | 34.0 ± 3.8 |

Results of the measurement of the vascular resistance in the transplanted left lungs are shown in Table 8. Degree of the arteriosclerotic degeneration was significantly lower in Group IV than in Group V.

**Table 8**

| Pulmonary vascular resistance in transplanted lung (dynes·sec·cm⁻⁵) | | |
|---|---|---|
| Group | Organ donor (before left lung excision) | Organ recipient (130 minutes after left lung transplantation and blood recirculation) |
| IV | 447.6 ± 125.8 | 682.2 ± 287.6 |
| V | 495.3 ± 107.2 | 2235.7 ± 297.6 |

Results of the calculation of the wet to dry weight ratios are shown in Table 9. Degree of edema was significantly lower in Group IV than in Group V.

**Table 9**

| Wet to dry weight ratio of transplated lung | |
|---|---|
| Group | Ratio |
| IV | 5.7 ± 0.3 |
| V | 8.1 ± 0.5 |

When the HE-stained specimens were observed, all of the specimens obtained from Group IV showed almost the normal lung structure. As for Group V, however, serious edema-like changes were found in all cases.

On the basis of the above results, it was confirmed that the solution for organ transplantation use of the present invention exhibits an excellent effect regarding maintenance of living organ functions. Especially, a solution whose K⁺ concentration is about half the concentration of Na⁺ or lower and which contains hydroxyethyl starch (such a solution as prepared in Example 3) shows a considerable effect even after 20 hours of storage.

According to the present invention, a solution for organ transplantation use can be provided which is useful for perfusion through, and long-time storage of, living organs to be transplanted without spoiling various functions of the organs and is stable from the galenical pharmacy point of view.

## Claims

1. A solution for living organ transplantation use which comprises the following components dissolved per 1,000 ml of the solution within the following respective ranges, and has an osmotic pressure of from 270 to 450 mOsm/l and a pH value of from 7 to 8;
| | |
|---|---|
| trehalose | 50 - 240 mM |
| Na⁺ | 10 - 140 mM |
| K⁺ | 4 - 140 mM |
| Mg⁺⁺ | 0 - 4 Mm |
| Ca⁺⁺ | 0 - 2 mM |
| H₂PO₄⁻ and/or HPO₄⁻⁻ | 12 - 65 mM |
| one or more of Cl⁻, HCO₃⁻, CO₃⁻⁻, an organic acid, and an organic acid anion | 15 - 150 mM |
| hydroxyethyl starch | 0 - 80 g. |

2. A system for use in the preservation of living organs for storage, comprising a solution as defined in claim 1, and means for storing a living organ in said solution and/or perfusing a living organ with said solution.

3. A system according to claim 2 including an organ stored in and/or perfused with said solution.

## Patentansprüche

1. Lösung zur Verwendung bei der Transplantation eines lebenden Organs, welche die folgenden gelösten Bestandteile pro 1000 ml der Lösung in den nachstehenden Bereichen enthält und einen osmotischen Druck von 270 bis 450 mOsm/l und einen pH-Wert von 7 bis 8 hat
| | |
|---|---|
| Trehalose | 50 - 240 mM |
| Na⁺ | 10 - 140 mM |
| K⁺ | 4 - 140 mM |
| Mg⁺⁺ | 0 - 4 mM |
| Ca⁺⁺ | 0 - 2 mM |
| H₂PO₄⁻ und/oder HPO₄⁻⁻ | 12 - 65 mM |
| eines oder mehr von Cl⁻, HCO₃⁻, CO₃⁻⁻, eine organische Säure und ein Anion einer organischen Säure | 15 - 150 mM |
| Hydroxyethylstärke | 0 - 80 g. |

2. System zur Verwendung zum Konservieren lebender Organe zur Aufbewahrung, enthaltend eine Lösung gemäß der Definition in Anspruch 1 und Einrichtungen zum Aufbewahren eines lebenden Organs in der Lösung und/oder zur Perfusion eines lebenden Organs mit der Lösung.

3. System nach Anspruch 2, welches ein in dieser Lösung aufbewahrtes und/oder mit dieser Lösung perfundiertes Organ enthält.

## Revendications

1. Solution à utiliser pour la greffe d'organes vivants, laquelle comprend les composants suivants, dissous en quantités comprises dans les plages respectives suivantes par 1 000 ml de solution, et présente une pression osmotique comprise entre 270 et 450 mOsm/l et un pH compris entre 7 et 8 ;
| | |
|---|---|
| tréhalose | 50 - 240 mM |
| Na⁺ | 10 - 140 mM |
| K⁺ | 4 - 140 mM |
| Mg⁺⁺ | 0 - 4 mM |
| Ca⁺⁺ | 0 - 2 mM |
| H₂PO₄⁻ et/ou HPO₄⁻⁻ | 12 - 65 mM |
| Cl⁻ et/ou HCO₃⁻ et/ou CO₃⁻⁻ et/ou un acide organique et/ou un anion d'acide organique | 15 - 150 mM |
| hydroxyéthylamidon | 0 - 80 g |

2. Système à utiliser dans la conservation d'organes vivants en vue de leur stockage, comprenant une solution selon la revendication 1 et des moyens de conservation d'un organe vivant dans ladite solution et/ou de perfusion d'un organe vivant au moyen de ladite solution.

3. Système selon la revendication 2, comprenant un organe conservé dans ladite solution et/ou perfusé au moyen de ladite solution.
